# EUROPÄISCHE PATENTSCHRIFT

(11) **EP 0 747 274 B1**
(45) Veröffentlichungstag und Bekanntmachung des Hinweises auf die Patenterteilung: **04.10.2000**
(21) Anmeldenummer: 95113451.9
(22) Anmeldetag: 28.08.1995
(51) Int. Cl.: B60T 7/08

(54) **Betätigungsvorrichtung für eine Feststellbremse**
Actuating device for a parking brake
Dispositif d'actionnement pour un frein de stationnement

(30) Priorität: 09.06.1995 DE 19521159
(43) Veröffentlichungstag der Anmeldung: 11.12.1996
(73) Patentinhaber: Dr.Ing.h.c. F. Porsche Aktiengesellschaft, 70435 Stuttgart (DE)
(72) Erfinder: Barbunopulos, Vasil, D-71665 Vaihingen (DE)

(56) Entgegenhaltungen:
- EP-A- 0 565 768
- CH-A- 333 766
- DE-A- 2 113 716
- DE-A- 3 428 156
- DE-A- 3 622 479

## Beschreibung

Die Erfindung bezieht sich auf eine Betätigungsvorrichtung für eine Feststellbremse nach dem Oberbegriff des Anspruches 1.

Aus der DE-A 21 13 716 ist eine Betätigungsvorrichtung für eine Feststellbremse bekannt, die aus zwei in Längsrichtung geteilten Schalen besteht. Der Betätigungshebel der Bremse umfaßt dreieckförmige Lagerschalen zur Aufnahme einer Sperrklinke. An diese Lagerschalen schließen sich halbzylindrische Teile zur Aufnahme eines Handgriffs an. Der Sperrklinke gegenüberstehend ist ein Sperrsegement in einer Grundplatte gehalten, angeordnet.

Aufgabe der Erfindung ist es, eine verbesserte Betätigungsvorrichtung für eine Feststellbremse zu schaffen, die als Baueinheit vormontierbar ist, eine kompakte Vorrichtung darstellt und in einfacher Weise ins Fahrzeug montierbar ist.

Diese Aufgabe wird erfindungsgemäß durch die kennzeichnenden Merkmale des Anspruches 1 gelöst. Weitere vorteilhafte Merkmale beinhalten die Unteransprüche.

Die mit der Erfindung hauptsächlich erzielten Vorteile bestehen darin, daß der Handbremshebel aus Schalen besteht, d.h. die beiden Hebelseitenteile sind als Halbschalen ausgebildet und werden über eine oberseitige Abdeckblende abgeschlossen. Diese Schalen werden in einfacher Weise über Schrauben, Niete oder dergleichen Befestigungsmittel miteinander verbunden. Die Halbschalen sind innenseitig so ausgestaltet, daß Anformungen integriert sind, welche eine Lagerung für eine Festsetzeinrichtung mit Betätigungsstange ermöglichen. Diese ist in einer rohrförmigen Anformung der Halbschalen geführt.

Die Abdeckblende bildet einen oberen Abschluß für die Halbschalen des Handbremshebels und wird auf die Seitenteile dieser Halbschalen in einfacher Weise ohne zusätzliche Befestigungsmittel aufgeklipst. Hierdurch werden seitliche Verbindungskanten erzielt und eine oberliegende Verbindungskante vermieden, die bei zusammentreffenden Halbschalen ohne Abdeckblende entstehen würde. Es ergibt sich somit eine beidseitige Kante, die bei einem Lederbezug den Nahtverlauf kennzeichnet.

Die Abdeckblende sowie ein auf die rohrförmige Anformung aufgeschobener Handgriff bilden mit den Halbschalen eine durchgehende Fläche ohne Absetzungen.

Die Festsetzeinrichtung, im wesentlichen bestehend aus einer Sperrklinke, einem Sperrsegment und einer Betätigungsstange, werden vormontiert, wobei die Sperrklinke und die Betätigungsstange in den Halbschalen vormontiert werden, so daß sich eine kompakte Baueinheit ergibt, die voreingestellt und außerhalb des Fahrzeugs als Modul gebaut werden kann. Die Aufnahme in einem Lagerbock, der mit dem Fahrzeugaufbau verbunden ist, erleichtert die Montage ins Fahrzeug wesentlich.

Durch innenseitig der Halbschalen angeformte Innenbuchsen zur schwenkbaren Aufnahme der Sperrklinke und weiteren angeformten Innenbuchsen zur Aufnahme einer Lagerhülse, die im Lagerbock gehalten sind, wird ein Bauteilen, einfach vormontierbarer Handbremshebel geschaffen, der mit wenigen Handgriffen zusammenbaubar ist.

Eine außenseitig angeformte Außenbuchse für die Lagerung des Handbremshebels weist zum Zusammenwirken mit einem im Lagerbock befestigten Kontaktschalter eine angeformte Rippe auf, die gleichzeitig die Außenbuchse stützt und mit der gleichzeitig ein angeformter Hebel zur Verbindung mit einer Zugstange für einen Bowdenzug der Radbremse versehen ist.

In einfacher Weise werden die beiden Halbschalen mittels Schrauben im Bereich der Lagerplatte sowie über eine Nietung zwischen Querschenkeln der Halbschalen verbunden, wobei zusätzliche Verbindungen im Bereich der Abdeckblende über parallel liegende Schenkel der Halbschalen erfolgt.

Innerhalb der beiden Halbschalen sind Vorsprünge zu beiden Seiten des Sperrsegments zur seitlichen Führung desselben vorgesehen.

Der Lagerbock für den Handbremshebel bildet eine stabile Anbindung an den Fahrzeugaufbau und weist mindestens vier Auflagefüße auf und ist so ausgestaltet, daß der Handbremshebel einfach einsetzbar und das Sperrsegment so zu befestigen ist, daß eine Wirkverbindung mit der Sperrklinke im Handbremshebel ohne aufwendige Einstellarbeiten durchführbar ist. Der Kontaktschalter sowie das Sperrsegment sind an verschiedenen Wandungen bzw. Schenkel des Lagerbockes gehalten, wobei die Verbindungsstange in einem Tunnel nach hinten -in bezug auf die Fahrtrichtungweggeführt ist.

Damit oberseitig des Handbremshebels eine schmutzaufnehmende Verbindungsfuge vermieden wird, ist die Abdeckblende auf den Halbschalen geklipst, so daß sich seitliche Fugen ergeben. Eine die Halbschalen überdeckende dachförmige ebene Platte bewirkt einen verschmutzungsfreien oberen Abschluß des Handbremshebels sowie eine Abdeckung eines verbleibenden Zwischenraumes in der mit dem Lagerbock verbundenen anschließenden Mittelkonsole.

Ein Ausführungsbeispiel der Erfindung ist in den Zeichnungen dargestellt und wird im folgenden näher beschrieben:

Es zeigen:

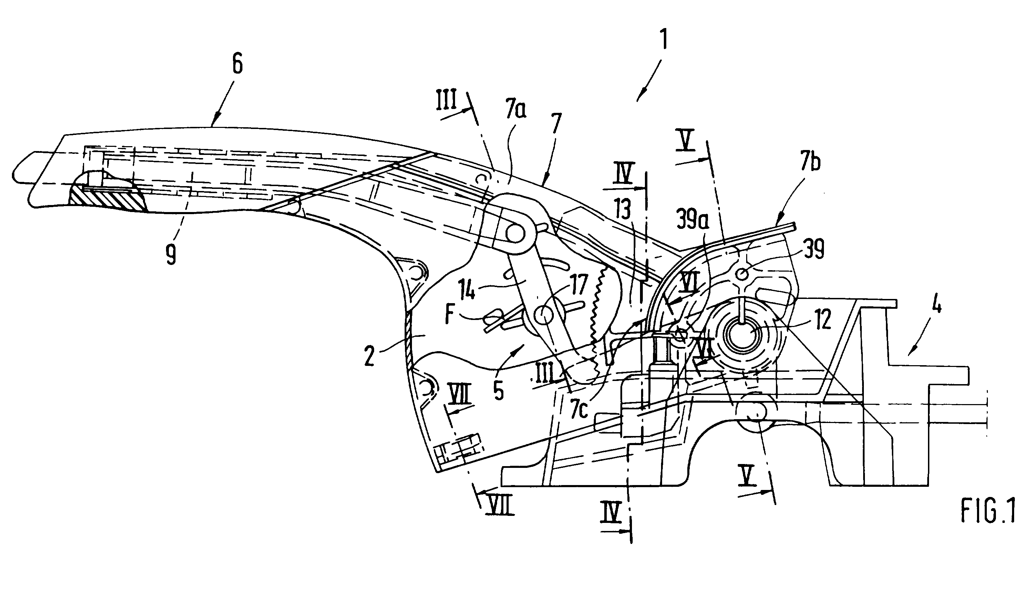

- Fig. 1: Eine Seitenansicht eines Handbremshebels mit Lagerbock,
- Fig. 2: eine Seitenansicht einer Halbschale eines Handbremshebels,
- Fig. 3: einen Schnitt nach der Linie III-III durch den Handbremshebel gemäß Fig. 1 der Sperrklinke,
- Fig. 4: einen Schnitt nach der Linie IV-IV durch den Handbremshebel gemäß Fig. 1 im Bereich des Sperrsegments,

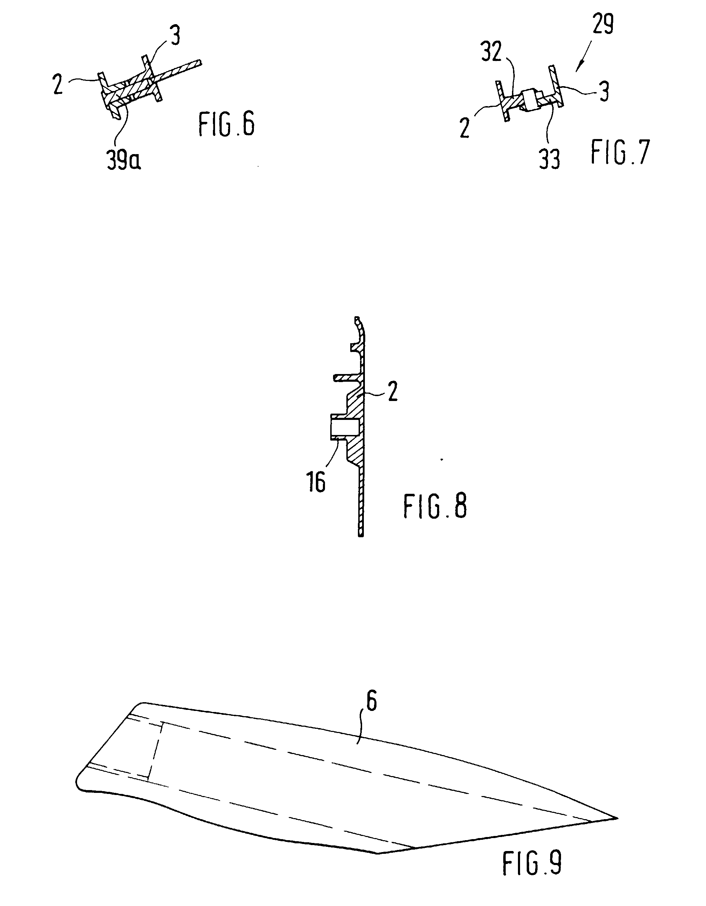

- Fig. 5: einen Schnitt nach der Linie V-V durch den Handbremshebel gemäß Fig. 1 im Bereich der Lagerung,
- Fig. 6: einen Schnitt nach der Linie VI-VI durch eine Schraubverbindung der beiden Halbschalen gemäß Fig. 1,
- Fig. 7: einen Schnitt nach der Linie VII-VII durch eine Nietverbindung der beiden Halbschalen gemäß Fig. 1,
- Fig. 8: einen Schnitt nach der Linie VIII-VIII durch die Lagerung der Sperrklinke gemäß Fig. 2,
- Fig. 9: eine Seitenansicht auf einen Handgriff des Handbremshebels,

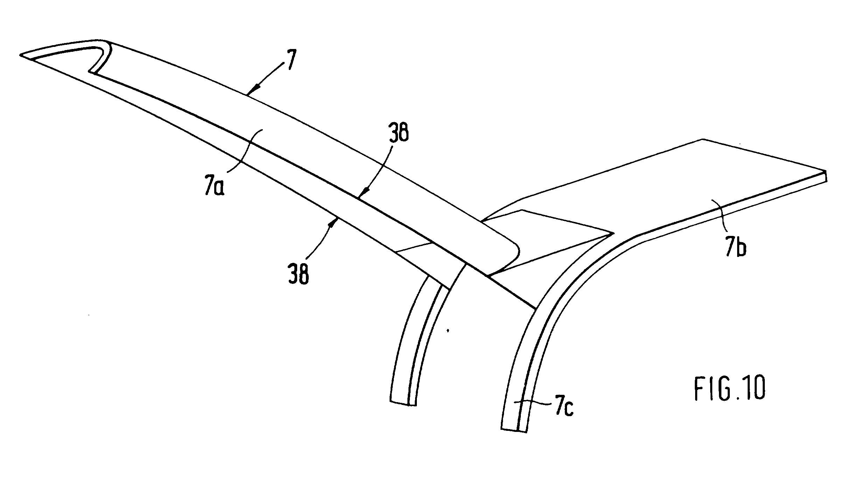

- Fig. 10: eine schaubildliche Darstellung einer Abdeckblende,
- Fig. 11: eine Seitenansicht der Abdeckblende,
- Fig. 12: einen Schnitt nach der Linie XII-XII der Abdeckblende gemäß Fig. 11,
- Fig. 13: eine Ansicht auf die Abdeckblende in Pfeilrichtung Z gesehen und

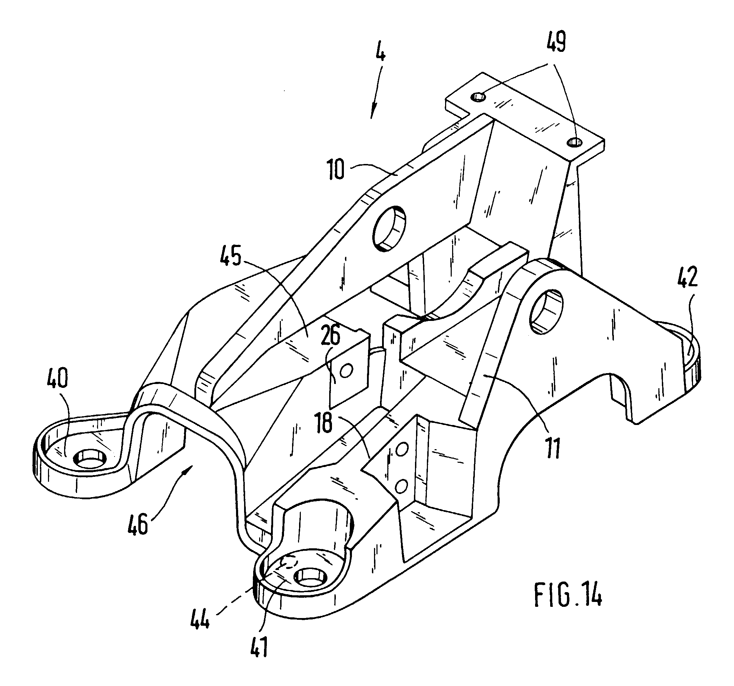

- Fig. 14: eine Ansicht des Lagerbockes in schaubildlicher Darstellung.

Die Betätigungsvorrichtung 1 umfaßt einen aus zwei Halbschalen 2,3 bestehenden Grundkörper eines Handbremshebels. Dieser ist mit einem aufbauseitig gehaltenem Lagerbock 4 verbunden und weist eingeschlossen eine Festsetzeinrichtung 5 sowie Lagerungen hierfür auf. Die Halbschalen 2,3 sind mit einem Handgriff 6 verbunden, wobei eine Abdeckblende 7 im Anschluß an den Handgriff 6 die Halbschalen 2,3 nach oben hin flächengleich abschließt.

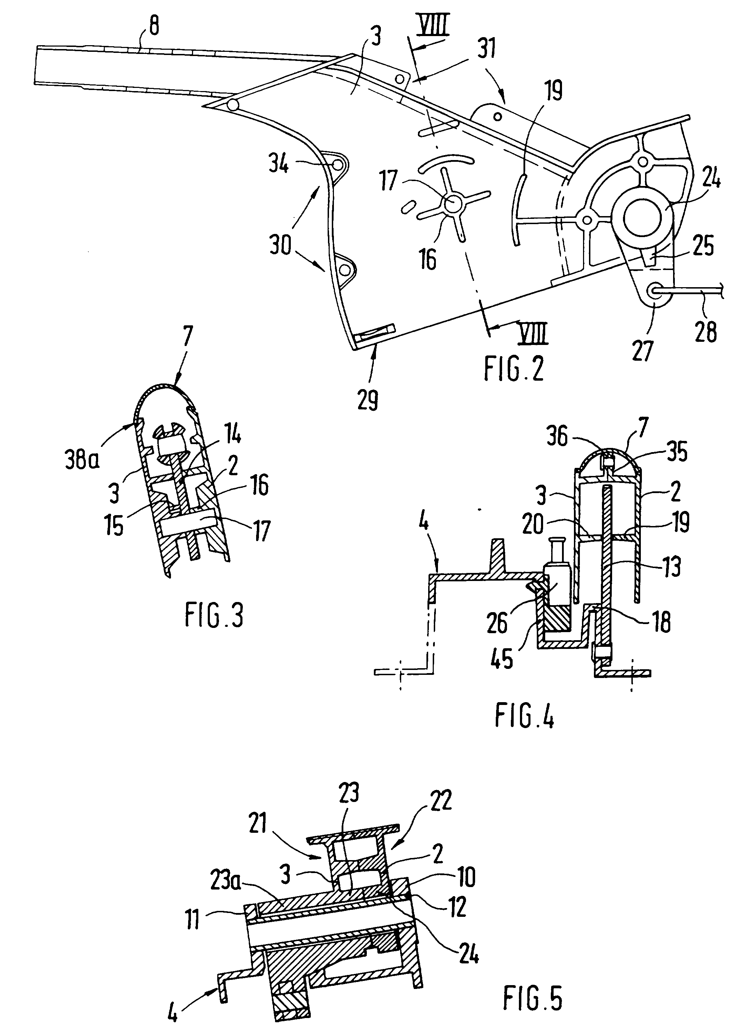

Die Halbschalen 2,3 weisen zur Aufnahme des Handgriffs 6 sowie zur Längsführung einer mit der Festsetzeinrichtung 5 verbundenen Betätigungsstange 9 jeweils zu einer rohrförmigen Führung zusammengesetzte halbkreisförmige Ansätze 8 auf, was in Fig. 2 näher dargestellt ist.
Der Handbremshebel ist im Lagerbock 4 zwischen Schenkel 10,11 auf einer Lagerhülse 12 schwenkbar gehalten. Zur Aufnahme der Lagerhülse 12 bzw. Lagerrohr weisen die Halbschalen 2,3 Lagerplatten 21,22 mit angeformten Innenbuchsen 23,24 auf, die eine Verdrehsicherung über einen beidseitigen stirnseitigen Absatz besitzen. Die eine Innenbuchse 23 ist nach außen vorstehend als Außenbuchse 23a weitergeführt und über Rippen 25 abgestützt. Eine der Rippen ist so angeordnet, daß bei in nichtgebremster Stellung stehenden Handbremshebel, die Rippe einen Kontaktschalter 26 am Lagerbock 4 betätigen kann. Ebenfalls ist an die Außenbuchse 23a ein Hebel 27 mit angegossen, der mit einer Zugstange 28 verbindbar ist.

Über die Festsetzeinrichtung 5, welche aus einem Sperrsegment 13 und einer über die Betätigungsstange 9 bewegbaren Sperrklinke 14 besteht, kann der Handbremshebel in seinen verschiedenen Stellungen zur Betätigung der Bremse verstellt werden.

In den Halbschalen 2,3 sind zur Aufnahme der Sperrklinke 14 angeformte Innenbuchsen 15,16 vorgesehen, die einen Lagerzapfen 17 für die Sperrklinke 14 aufweisen. Über ein Federelement F ist diese Sperrklinke (14) vorgespannt. Das Sperrsegment 13 ist im Lagerbock 4 an einem Schenkel 18 befestigt. Eine seitliche Führung des Sperrsegments 13 erfolgt zwischen innerhalb der Halbschalen 2,3 angeformte Vorsprünge 19,20.

Die Halbschalen 2,3 werden über mehrere Verbindungen 29,30,31 miteinander befestigt. Eine erste Verbindung 29 erfolgt über quergestellte Schenkel 32,33 an den Halbschalen 2,3, die über eine Nietung, Schraubung oder dergleichen erfolgt. Die weitere Verbindung 30 erfolgt über Fixierstifte 34, die in Ausnehmungen eingreifen. Gegenüberliegend erfolgt die Verbindung von parallel liegenden Schenkeln 35,36 der Halbschalen 2,3 über Schraubmittel oder dergleichen Verbindungsmittel. Im Bereich der Lagerplatten 21,22 sind weitere Schrauben 39,39a zur Verbindung der Halbschalen 2,3 vorgesehen.

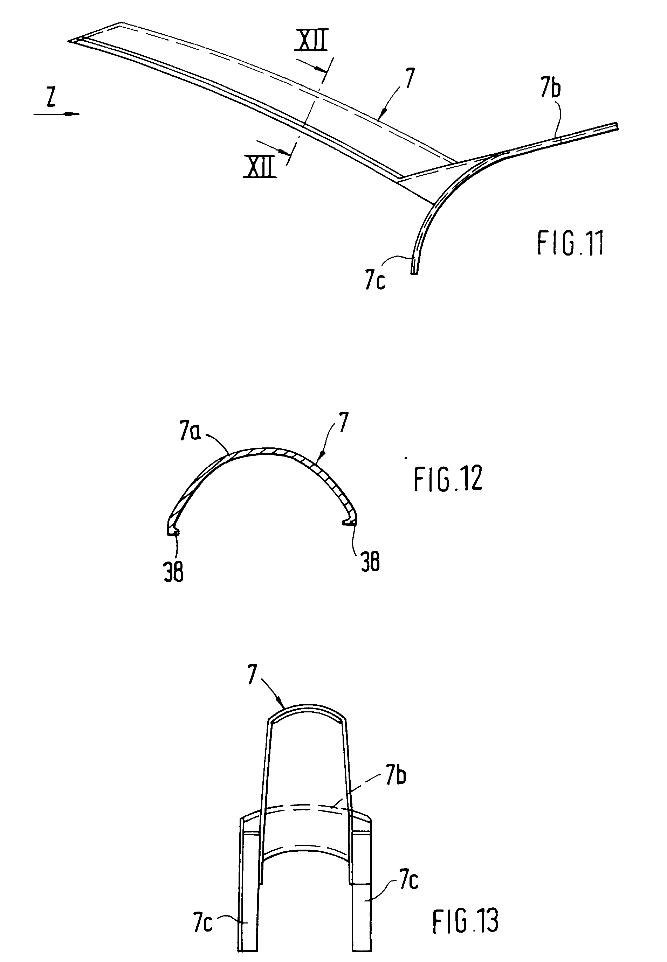

Die obenseitig der beiden Halbschalen 2,3 vorgesehene Abdeckblende 7 gemäß der Fig. 11 bis 13 umfaßt einen an den Handgriff 6 sowie an die Außenflächen der Halbschalen 2,3 flächengleich anschließenden, im Querschnitt halbkreisförmig ausgeformten, länglichen Abschnitt 7a. Dieser weist an seinen Längskanten Hakennieten 38 auf, die in entsprechende Ausnehmungen 38a eingeklipst werden. Anschließend an diesen länglichen Abschnitt 7a ist eine ebene Platte 7b anschließend, welche die Lagerplatten 21,22 von oben abschließend übergreifen. Angeformte Streifen 7c legen sich randseitig an die Lagerplatten 21,22 an.

Der Lagerbock 4 zur schwenkbaren Aufnahme des Handbremshebels weist mindestens vier Auflagefüße 40 bis 43 auf. Mindestens zwei Füße sind unterseitig mit Zapfen 44 versehen, die eine genaue Lage des Lagerbockes 4 zum Aufbau herstellen sollen. Desweiteren sind Befestigungsbohrungen 49 zur Aufnahme einer anschließenden Mittelkonsole vorgesehen. Hierdurch wird der Lagerbock 4 und somit der Handbremshebel in eine richtige Lage positioniert. Der eine Halteschenkel 18 des Lagerbockes 4 dient zur Aufnahme des feststehenden Sperrsegments 13 und ein weiterer Halteschenkel 45 des Lagerbockes 4 dient zur Aufnahme des Kontaktschalters 26. In einem im Querschnitt U-förmigen längsverlaufenden Hohlraum 46 des Lagerbockes 4 sind die Zugstange 28 und Kabelstränge geführt.

## Patentansprüche

1. Betätigungsvorrichtung für eine Feststellbremse mit einem aus miteinander verbundenen Schalen (2, 3) bestehenden Handbremshebel mit aufsteckbarem einteiligen Handgriff (6), wobei in dem Handbremshebel auf Lagerungen eine ein Sperrsegment (13) mit Sperrklinke (14) umfassende Festsetzeinrichtung gehalten und über eine Betätigungsstange (9) bedienbar und das Sperrsegment (13) auf einem am Fahrzeug gehaltenen Lagerbock (4) befestigt ist, dadurch gekennzeichnet, daß der Handbremshebel über eine Abdeckblende (7) obenseitig abgeschlossene Schalen (2,3) mit innenseitig angeformten Lagerbuchsen (15, 16 und 23, 24) für die Festsetzeinrichtung (5) sowie für die schwenkbare Lagerung des Handbremshebels in dem Lagerbock (4) umfaßt und die Schalen (2, 3) jeweils angeformte rohrförmige und abgesetzte Führungsansätze (8) für die Betätigungsstange (9) aufweisen und diese zusammen mit dem Handgriff (6) verbunden sind, welcher mit der Abdeckblende (7) und den Schalen (2, 3) eine bündig, durchgehende Außenoberfläche des Handbremshebels ergibt.

2. Vorrichtung nach Anspruch 1, dadurch gekennzeichnet, daß die Lagerbuchsen (15, 16) als integrierte Lagerung für die Sperrklinke (14) ausgebildet sind und auf einem Lagerzapfen (17) die Sperrklinke (14) schwenkbar angeordnet und über ein Federelement (F) vorgespannt ist.

3. Vorrichtung nach Anspruch 1 oder 2, dadurch gekennzeichnet, daß die Lagerbuchsen (23, 24) jeweils an einer Lagerplatte (21, 22) der Schalen (2, 3) vorgesehen sind, aneinander liegen und zwischen Schenkeln (10,11) des Lagerbockes (4) auf einer Lagerhülse (12) gehalten sind.

4. Vorrichtung nach den Ansprüchen 1, 2 oder 3, dadurch gekennzeichnet, daß die eine Schale (3) zusätzlich zur inneren Lagerbuchse (23) eine äußere Lagerbuchse (23a) aufweist, welche über Rippen (25) zur Schale (3) abgestützt ist und eine Rippe (25) mit einem am Lagerbock (4) gehaltenen Kontaktschalter (26) in Eingriff steht.

5. Vorrichtung nach Anspruch 4, dadurch gekennzeichnet, daß die Lagerbuchse (23a) einen angegossenen, nach unten ragenden Hebel (27) aufweist, der mit einer Zugstange (28) verbunden ist.

6. Vorrichtung nach Anspruch 1 oder einem der vorhergehenden Ansprüche, dadurch gekennzeichnet, daß das Sperrsegment (13) am Lagerbock (4) befestigt ist und mit der Sperrklinke (14) der Betätigungsstange (9) in Eingriff steht und die Sperrklinke (14) zwischen beidseitig angeformten inneren Vorsprüngen (19, 20) der Schalen (2, 3) geführt ist.

7. Vorrichtung nach Anspruch 3, dadurch gekennzeichnet, daß eine Verbindung der beiden Schalen (2, 3) einerseits über eine im Fuß vorgesehene Verbindung von zwei angeformten Querschenkeln (32, 33) sowie über Schrauben (39,39a) im Bereich der Lagerplatten (21, 22) der Schalen (2,3) erfolgt und andererseits zusammengeführte Schenkel (35, 36) der beiden Schalen (2, 3) miteinander verbunden sind, die von der Abdeckblende (7) umgeben sind.

8. Vorrichtung nach Anspruch 1 oder einem der vorhergehenden Ansprüche, dadurch gekennzeichnet, daß der Lagerbock (4) sowie die Schalen (2, 3) aus einer Leichtmetall-Gußlegierung bestehen.

9. Vorrichtung nach Anspruch 1 oder einem der vorhergehenden Ansprüche, dadurch gekennzeichnet, daß der Lagerbock (4) aus einem mindestens vier Auflagefüße (40 bis 43) aufweisenden Fußteil besteht, wobei in mindestens zwei Füßen Fixierzapfen (44) angeformt sind und der Lagerbock (4) Aufnahmebohrungen (B) für die Lagerhülse (12) des Handbremshebels sowie einen Halteschenkel (18) für das feststehende Sperrsegment (13) und ein weiterer Haltesschenkel (45) einen Kontaktschalter (26) vorgesehen ist und zwischen den Auflagefüßen (40 bis 43) in einem längsverlaufenden und im Querschnitt U-förmigen Hohlraum (46) die Zugstange (28) sowie Kabelstränge heraus- bzw. durchgeführt sind.

10. Vorrichtung nach Anspruch 3, dadurch gekennzeichnet, daß die Abdeckblende (7) im Bereich der Schalen (2, 3) des Handbremshebels einen längsverlaufenden Abschnitt (7a) mit halbkreisförmigen Querschnitt aufweist, der im Bereich der Lagerplatten (21, 22) der Schalen (2, 3) diese dachförmig mit einer ebenen Platte (7b) umgreift, die nach vorn mittels Streifen (7c) bogenförmig um die Hebellagerung herumgeführt ist.

11. Vorrichtung nach Anspruch 10, dadurch gekennzeichnet, daß die Abdeckblende (7) längsverlaufende Hakenleisten (38) aufweist, die korrespondierend mit entsprechenden Ausnehmungen (38a) in den Schalen (2, 3) zusammenwirkt und die Abdeckblende (7) auf die Schalen (2, 3) clipsbar ist.

## Claims

1. An actuating device for a parking brake, with a hand-brake lever comprising mutually connected shells (2, 3) and having an attachable one-piece handle (6), wherein a fixing device comprising a locking segment (13) with a locking pawl (14) is held on mountings in the hand-brake lever and can be operated by way of an actuating rod (9), and the locking segment (13) is secured to a bearing stand (4) held on the vehicle, **characterized in that** the hand-brake lever comprises shells (2. 3) closed off at the top by a covering screen (7) and having bearing bushes (15, 16 and 23, 24) integrally formed on the inside for the fixing device (5) and for the pivotable mounting of the hand-brake lever in the bearing stand (4), and the shells (2, 3) are each provided with respective integrally formed tubular and offset guiding attachments (8) for the actuating rod (9) and are connected together to the handle (6) which produces, together with the covering screen (7) and the shells (2, 3), a flush continuous outer surface of the hand-brake lever.

2. A device according to Claim 1, **characterized in that** the bearing bushes (15, 16) are constructed in the form of an integrated mounting for the locking pawl (14), and the locking pawl (14) is arranged pivotably on a bearing pin (17) and is pre-stressed by way of a spring member (F).

3. A device according to Claim 1 or 2, **characterized in that** the bearing bushes (23, 24) are each provided on a respective bearing plate (21, 22) of the shells (2, 3), rest against each other and are held on a bearing sleeve (12) between arms (10, 11) of the bearing stand (4).

4. A device according to Claim 1, 2 or 3, **characterized in that** one shell (3) is provided, in addition to the inner bearing bush (23), with an outer bearing bush (23a) supported by way of ribs (25) with respect to the shell (3), and a rib (25) engages with a contact switch (26) held on the bearing stand (4).

5. A device according to Claim 4, **characterized in that** the bearing bush (23a) is provided with an integrally cast lever (27) projecting downwards and connected to a pull rod (28).

6. A device according to Claim 1 or one of the preceding Claims, **characterized in that** the locking segment (13) is secured to the bearing stand (4) and engages with the locking pawl (14) of the actuating rod (9), and the locking pawl (14) is guided between inner projections (19, 20) on the shells (2, 3) formed integrally on both sides thereof.

7. A device according to Claim 3, **characterized in that** on the one hand the two shells (2, 3) are connected by way of a connexion - provided in the base - of two integrally formed transverse arms (32, 33) and by way of screws (39, 39a) in the region of the bearing plates (21, 22) of the shells (2, 3), and on the other hand arms (35. 36) - brought together and surrounded by the covering screen (7) - of the two shells (2, 3) are connected together.

8. A device according to Claim 1 or one of the preceding Claims, **characterized in that** the bearing stand (4) and the shells (2, 3) consist of a cast light-metal alloy.

9. A device according to Claim 1 or one of the preceding Claims, **characterized in that** the bearing stand (4) comprises a base part provided with at least four support feet (40 to 43), wherein fixing pins (44) are formed integrally in at least two feet and the bearing stand (4) [has] receiving bores (B) for the bearing sleeve (12) of the hand-brake lever as well as a retaining arm (18) for the fixed locking segment (13), and a further retaining arm (45) [for] a contact switch (26) is provided, and the pull rod (28) and bunched cables pass out or through between the support feet (40 to 43) in a longitudinally extending cavity (46) of U-shaped cross-section.

10. A device according to Claim 3, **characterized in that** in the region of the shells (2, 3) of the hand-brake lever the covering screen (7) has a longitudinally extending portion (7a) of semicircular cross-section which in the region of the bearing plates (21, 22) of the shells (2, 3) engages around the latter in the form of a roof with a flat plate (7b) passing forwards around the mounting of the lever in a curved manner by means of strips (7c).

11. A device according to Claim 10, **characterized in that** the covering screen (7) is provided with longitudinally extending catching strips (38) cooperating in a corresponding manner with matching recesses (38a) in the shells (2, 3), and the covering screen (7) can be clipped onto the shells (2, 3).

## Revendications

1. Dispositif d'actionnement d'un frein de stationnement comportant un levier de frein à main, constitué de coques (2, 3) reliées entre elles, avec poignée (6) emboîtable, d'une seule partie, dans le levier de frein à main, un dispositif de blocage, comprenant un segment d'arrêt (13) avec cliquet d'arrêt (14), étant maintenu sur des paliers et pouvant être commandé au moyen d'une tige d'actionnement (9), et le segment d'arrêt (13) étant fixé sur un support (4) fixé au véhicule, caractérisé en ce que le levier de frein à main comprend des coques (2, 3) fermées à leur partie supérieure au moyen d'un panneau de couverture (7), avec des coussinets (15, 16 et 23, 24), venus de moulage sur leur face intérieure, pour le dispositif de blocage (5) ainsi que pour la suspension à pivotement du levier de frein à main dans le support (4), et les coques (2, 3) présentent chacune des appendices de guidage (8) tubulaires et étagés, venus de moulage, pour la tige d'actionnement (9), et ces appendices de guidage sont reliés ensemble à la poignée (6) qui, avec le panneau de couverture (7) et les coques (2, 3), forme une surface extérieure continue et dans un même plan du levier de frein à main.

2. Dispositif selon la revendication 1, caractérisé en ce que les coussinets (15, 16) sont réalisés sous la forme d'une suspension intégrée pour le cliquet d'arrêt (14) et le cliquet d'arrêt (14) est disposé de manière à pouvoir pivoter sur un tourillon (17) et est précontraint par l'intermédiaire d'un élément à ressort (F).

3. Dispositif selon la revendication 1 ou 2, caractérisé en ce que les coussinets (23, 24) sont prévus chacun sur une plaque de palier (21, 22) des coques (2, 3), ils sont disposés côte à côte et sont maintenus entre des côtés (10, 1 1 ) du support (4), sur une douille de palier( 12).

4. Dispositif selon les revendications 1, 2 ou 3, caractérisé en ce qu'une coque (3) présente, en supplément au coussinet intérieur (23), un coussinet extérieur (23a) qui est soutenu par des nervures (25), par rapport à la coque (3) et une nervure (25) étant en prise avec un interrupteur de contact (26) fixé au support (4).

5. Dispositif selon la revendication 4, caractérisé en ce que le coussinet (23a) présente un levier (27) venu de fonderie et dépassant vers le bas, qui est relié à une barre de traction (28).

6. Dispositif selon la revendication 1 ou l'une des revendications précédentes, caractérisé en ce que le segment d'arrêt (13) est fixé au support (4) et est en prise avec le cliquet d'arrêt (14) de la tige d'actionnement (9), et le cliquet d'arrêt (14) est guidé entre des saillies intérieures (19, 20), venues de moulage sur les deux côtés des coques (2, 3).

7. Dispositif selon la revendication 3, caractérisé en ce qu'une liaison des deux coques (2, 3) s'effectue d'une part, par une liaison, prévue dans le pied, de deux côtés transversaux (32, 33) venus de moulage, ainsi que par des vis (39, 39a) dans la région des plaques de palier (21, 22) des coques (2, 3), et d'autre part, des côtés (35, 36) réunis des deux coques (2, 3) et qui sont entourés par le panneau de couverture (7) sont reliés entre eux.

8. Dispositif selon la revendication 1 ou l'une des revendications précédentes, caractérisé en ce que le support (4) ainsi que les coques (2, 3) sont faits d'un alliage de fonte en métal léger.

9. Dispositif selon la revendication 1 ou l'une des revendications précédentes, caractérisé en ce que le support (4) est constitué d'un élément formant pied, comportant au moins quatre pieds d'appui (40 à 43), des goujons de fixation (44) étant venus de moulage dans au moins deux pieds et le support (4) présentant des perçages de réception (B) pour la douille de palier (12) du levier de frein à train ainsi qu'une branche de maintien (18) pour le segment d'arrêt (13) fixe et une autre branche de maintien (45) présentant un interrupteur de contact (26), et entre les pieds d'appui (40 à 43), la barre de traction (28) ainsi que des faisceaux de câbles passent à travers une cavité (46) de section en U et s'étendant longitudinalement et ressortent de celle-ci.

10. Dispositif selon la revendication 3, caractérisé en ce que le panneau de couverture (7) présente dans la région des coques (2, 3) du levier de frein à main, un segment (7a) s'étendant longitudinalement de section transversale en forme de demi-cercle, qui, dans la région des plaques de palier (21, 22) des coques (2, 3), entoure celles-ci en forme de toit, par une plaque (7b) plane qui s'étend vers l'avant en arc, autour de la suspension du levier, par des bandes (7c).

11. Dispositif selon la revendication 10, caractérisé en ce que le panneau de couverture (7) présente des baguettes à crochets (38) s'étendant longitudinalement qui coopèrent en correspondance avec des évidements (38a) correspondants des coques (2, 3) et le panneau de couverture (7) peut être clipsé sur les coques (2, 3).
